Europäisches Patentamt

European Patent Office

Office européen des brevets

(19)

(11) Veröffentlichungsnummer : **0 129 793**
**B1**

(12) **EUROPÄISCHE PATENTSCHRIFT**

(45) Veröffentlichungstag der Patentschrift :
28.09.88

(51) Int. Cl.⁴ : **B 60 J 3/02**

(21) Anmeldenummer : **84106851.3**

(22) Anmeldetag : **15.06.84**

(54) **Sonnenblende für Fahrzeuge.**

(30) Priorität : **24.06.83 DE 3322736**

(43) Veröffentlichungstag der Anmeldung :
**02.01.85 Patentblatt 85/01**

(45) Bekanntmachung des Hinweises auf die Patenterteilung : **28.09.88 Patentblatt 88/39**

(84) Benannte Vertragsstaaten :
**DE FR GB IT SE**

(56) Entgegenhaltungen :
**DE-U- 1 849 602**
**DE-U- 8 125 330**
**FR-A- 2 365 455**

(73) Patentinhaber : **Gebr. Happich GmbH**
**Postfach 10 02 49 Clausenbrücke 1**
**D-5600 Wuppertal 1 (DE)**

(72) Erfinder : **Dietz, Günter**
**Eggenbruch 97**
**D-5600 Wuppertal 1 (DE)**

EP 0 129 793 B1

## Beschreibung

Die Erfindung bezieht sich auf eine Sonnenblende für Fahrzeuge mit einem als Polsterkörper ausgebildeten, in einer Hüllfolie eingebetteten und durch eine eingelagerte Verstärkungseinlage ausgesteiften Sonnenblendenkörper, der an einem Endbereich eines seiner Längsränder eine darin einendig eingelassene, anderendig von einem Schwenklager aufgenommene Lagerachse trägt und der am anderen Endbereich desselben Längsrandes, und zwar in einer Ausnehmung desselben, einen lösbar in die Lageraufnahme eines Gegenlagers einrastbaren, durch den Steg eines zwei Schenkel einendig miteinander verbindenden Baukörpers gebildeten Lagerzapfen aufweist.

In den Unterlagen des DE-U-81 25 330 ist das herstellungstechnische Problem angesprochen, die Befestigung des Lagerzapfens im Polsterkörper so zu bewirken, daß dessen Ummantelung mit der folienartigen Hülle von dem Lagerzapfen nicht behindert wird, wobei die Umhüllung in der Weise erfolgen soll, daß der Polsterkörper beidseitig jeweils mit einer Folie belegt und die beiden Folien dann entlang des Randes des Sonnenblendenkörpers, dessen Kontur folgend, in einem Arbeitsgang miteinander verschweißt werden.

In der genannten Druckschrift ist weiterhin angegeben, daß das geschilderte Problem im Stande der Technik auf zweierlei Weise gelöst wird. Die eine Problemlösung sieht vor, den Lagerzapfen mit in die folienartige Hülle einzubeziehen, das heißt auch den Zapfen mit der Folie zu umkleiden, während gemäß der anderen Problemlösung der Lagerzapfen erst nach der Fertigstellung der folienartigen Hülle in einem hierfür vorgesehenen Lagerkörper befestigt wird, wobei er durch randseitige Öffnungen in der Folie geführt wird.

Die sich auf die zweite Problemlösung mit freiliegendem Lagerzapfen beziehende DE-U-81 25 330 betrifft nun eine Sonnenblende, die sich dadurch auszeichnen soll, daß der von Ende zu Ende gerade Lagerzapfen mit seinen Endbereichen durch Öffnungen in der Hülle hindurch jeweils in ein Steckloch in dem einen bzw. anderen Schenkel eines innerhalb der Hülle im Sonnenblendenkörper befestigten, etwa U-förmigen Haltebügels eingesteckt und in dem einen Steckloch gegen Drehen und in dem anderen gegen axiales Verschieben bezüglich des Haltebügels gesichert ist. Bei diesem bekannten Vorschlag ist es erforderlich, in dem Sonnenblendenkörper einen Haltebügel einzulagern, was die Herstellung der Sonnenblende erschwert und verteuert. Insbesondere ist es aber erforderlich, den Lagerzapfen zunächst in das eine axiale Verschiebbarkeit zulassende Steckloch einzuführen und erst nachdem der Lagerzapfen in dieses eingeführt worden ist, durch nunmehriges Zurückschieben des Lagerzapfens in das andere Steckloch die axiale Sicherung, gegebenenfalls unter Ausnutzung eines Schnapp-Effektes, vorzunehmen. Diese Montageart verlangt zumindest ein erhebliches Maß an Fingerfertigkeit und erscheint insgesamt gesehen äußerst zeit- und arbeitsaufwendig zu sein.

Durch das DE-U-1 849 602 ist weiterhin eine Sonnenblende für Fahrzeuge bekanntgeworden, die ein in einer Aussparung des Polsterkörpers angeordnetes Drehlager aufweist, das mit dem inneren Drahtrahmen der Blende verbunden ist, wobei die Achse des Drehlagers von dem Steg eines U-förmigen Bügels gebildet ist, dessen durch das Polstermaterial unter Bildung der Aussparung hindurchgesteckte Schenkel sich in Haltemittel des Drahtrahmens verkrallen. Bei dieser Sonnenblende kommt es beim Verankern des Bügels leicht zu einer unschönen Ausbeulung des Polstermaterials. Herstellungstechnisch ist es von Nachteil, daß es zwingend erforderlich ist, an dem Drahtrahmen ein Haltemittel zu befestigen, welches in der Praxis aus einem am Drahtrahmen angeschweißten Blechgehäuse besteht.

Der Erfindung liegt hiernach die Aufgabe zugrunde, eine Sonnenblende der eingangs genannten Art in bezug auf die Ausbildung und Anordnung des Lagerzapfens zu verbessern und insbesondere dessen nach der Fertigstellung der den Polsterkörper ummantelnden Hülle durchzuführenden Montage zu vereinfachen.

Diese Aufgabe wird erfindungsgemäß dadurch gelöst, daß der Baukörper (17) auf einer Breitseite bzw. Hauptfläche des Sonnenblendenkörpers (1) aufliegend angeordnet und durch senkrecht zu dieser Fläche wirkende Befestigungsmittel am Sonnenblendenkörper (1) gehalten ist.

Der den Lagerzapfen aufweisende Baukörper ist ein als Massenartikel schnell, einfach und kostengünstig herzustellendes Bauteil, welches in besonders einfacher Weise am Sonnenblendenkörper zum Beispiel durch Schrauben, Nieten, Kleben oder einer Kombination dieser Maßnahmen befestigt werden kann. Da der Baukörper auf den fertig umhüllten Sonnenblendenkörper aufgesetzt wird, ist es nicht mehr erforderlich, in der Schweißnaht der Hülle Unterbrechungen vorzusehen und den Lagerzapfen durch solche Unterbrechungen hindurchzuzwängen. Der Baukörper kann kompakt ausgebildet sein und stört das äußere Erscheinungsbild der Sonnenblende nicht, zumal er farblich der jeweiligen Farbe der Umhüllung angepaßt werden kann, obwohl es natürlich auch möglich ist, eine Komplementärfarbe vorzusehen. Das äußere Erscheinungsbild der Sonnenblende kann in Ausgestaltung der Erfindung noch dadurch verbessert werden, daß der Baukörper in einer muldenförmigen Vertiefung des Sonnenblendenkörpers angeordnet ist.

In vorteilhafter Weise ist der Baukörper durch mindestens ein einseitig die Hüllfolie und den Polsterkörper bis zur Verstärkungseinlage durchdringendes Verankerungselement an der Verstärkungseinlage befestigt.

Eine weitere Ausgestaltung der Erdinfung sieht vor, daß die dem Steg abgewandten Schenkelenden des Baukörpers durch eine Sockelplatte miteinander verbunden sind und fernerhin ist vorgesehen, den Baukörper als Kunststoffspritzgußteil auszubilden. In diesem Zusammenhang ist es besonders vorteilhaft, das Verankerungselement als vorzugsweise einstückig mit der Sockelplatte des Baukörpers gefertigten Klips auszubilden. Dabei kann der Klips, dessen freier Endbereich mindestens zwei im Abtand voneinander angeordnete und parallel zueinander verlaufende Federarme mit außenseitig angeformten Rastnocken aufweist, schnäpperartig in dem Durchbruch einer mit der Verstärkungseinlage verbundenen Halteplatte angeordnet sein. Eine alternative Ausgestaltung kann darin bestehen, daß der Klips an seinem freien Endbereich einen ein Übergreifen der Verstärkungseinlage ermöglichenden Schlitz aufweist, der in eine hinterschnittene Aufnahmeöffnung für die Verstärkungseinlage mündet. In jedem Fall ist der Baukörper durch einfaches Eindrücken des Klipses in den Sonnenblendenkörper besonders schnell und mühelos zu montieren, was auch dann Gültigkeit hat, wenn ein Vorlochen der Hülle und gegebenenfalls auch der Polstermaterials, je nach Materialzusammensetzung der Hülle und/oder des Polstermaterials, erforderlich sein sollte. Von besonderem Vorteil ist auch die dem Auge eines Betrachters entzogene Anordnung des Befestigungselements, das heißt die unsichtbare Begestigungsart.

Die Schenkel des Baukörpers sind zwecks Anordnung und Ausrichtung des Lagerzapfens in der Mittelebene des Sonnenblendenkörpers gekrümmt.

Schließlich kann noch vorgesehen sein, daß der Lagerzapfen in einer kurz vor dem entsprechenden Stirnende des Sonnenblendenkörpers befindlichen Ausnehmung oder in einer unmittelbar an dem entsprechenden Ende befindlichen Ausnehmung angeordnet ist. In beiden Fällen läßt sich ein sauberer, dekorativ wirkender Abschluß erzielen.

Ausführungsbeispiele der Erfindung werden nachfolgend anhand der Zeichnungen näher erläutert. Es zeigen :

Fig. 1 ein erstes Ausführungsbeispiel der Sonnenblende,

Fig. 2 im vergrößerten Maßstab einen Schnitt folgend der Linie II-II in Fig. 1,

Fig. 3 ein zweites Ausführungsbeispiel der Sonnenblende und

Fig. 4 im vergrößerten Maßstab einen Schnitt IV-IV nach Fig. 3.

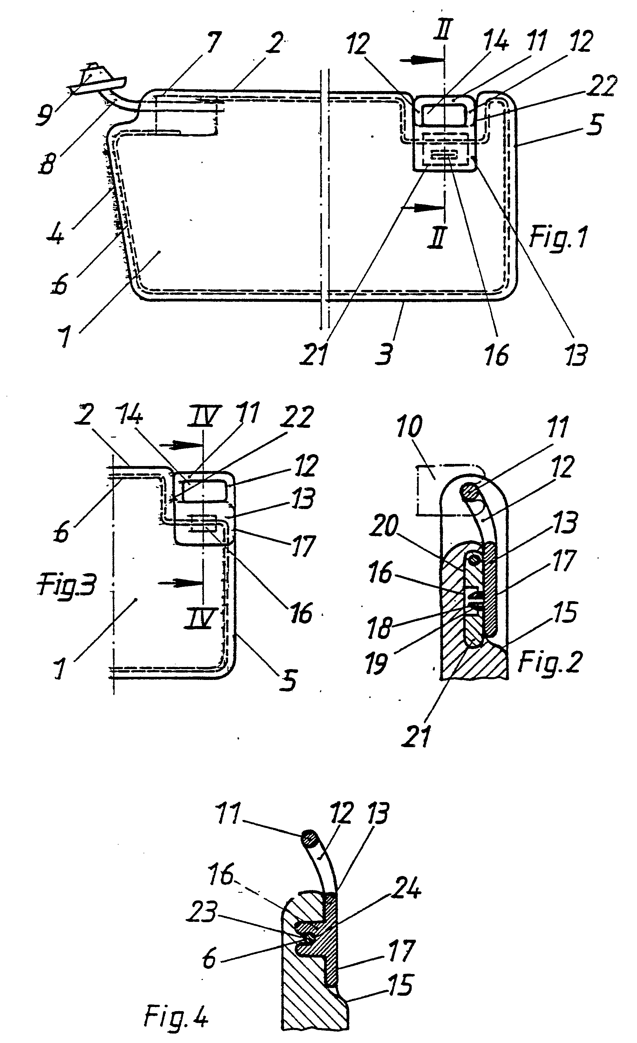

Die in den Fig. 1 und 2 dargestellte Sonnenblende weist einen als Polsterkörper ausgebildeten Sonnenblendenkörper 1 mit angenähert rechteckiger Umrißkontur und plattenförmiger Gestalt auf. Der Sonnenblendenkörper 1 besitzt eine obere Längskante 2, eine untere Längskante 3 sowie Stirnkanten 4 und 5. Nahe und etwa parallel zu den Kanten 2 bis 5 verlaufend ist in dem Sonnenblendenkörper 1 eine aus einem Drahtrahmen bestehende Verstärkungseinlage 6 eingelagert.

Im Bereich der oberen Längskante 2 weist der Sonnenblendenkörper 1, und zwar zeichnungslinksseitig der Fig. 1, ein eingelagertes und an der Verstärkungseinlage 6 festgelegtes Lagergehäuse 7 auf, indem ein Schenkel einer L-förmigen Lagerachse 8 gelagert ist, dessen anderer Schenkel in einem an einer Fahrzeugkarosserie zu befestigenden Schwenklager 9 sitzt. Zeichnungsrechtsseitig von Fig. 1 ist ebenfalls im Bereich der oberen Längskante 2 ein sogenanntes Gegenlager angeordnet, welches aus einem Gegenlagergehäuse 10 (vergleiche Fig. 2) und einem in dessen Lageraufnahme lösbar einrastbaren Lagerzapfen 11 besteht. Die Anordnung des Lagerzapfens 11 ist so getroffen, daß er mit dem im Lagergehäuse 7 befindlichen Schenkel der Lagerachse 8 fluchtet und eine gemeinsame Drehachse bildet.

Der Lagerzapfen 11 verbindet die Enden zweier parallel und im Abstand zueinander verlaufender Schenkel 12 miteinander, die anderendig durch eine Sockelplatte 13 ebenfalls miteinander verbunden sind. Lagerzapfen 11, Schenkel 12 und Sockelplatte 13 umrahmen eine fensterartige Öffnung 14. Die Sockelplatte 13 liegt auf einer Oberfläche des Sonnenblendenkörpers 1 auf, der im Auflagebereich eine muldenförmige Vertiefung 15 aufweist, deren Tiefe zumindest so bemessen ist, daß die Sockelplatte 13 die Außenfläche des Sonnenblendenkörpers 1 nicht überragt, sondern bevorzugt versenkt im Sonnenblendenkörper 1 aufgenommen ist. Auf der dem Sonnenblendenkörper 1 zugewandten Seite trägt die Sockelplatte 13 zumindest ein Befestigungselement, welches als Klips 16 ausgebildet ist. Bevorzugterweise bildet der Lagerzapfen 11 mit den Schenkeln 12 und der Sockelplatte 13 sowie mit dem Klips 16 einen einstückigen und materialeinheitlichen Baukörper 17, welcher zweckmäßigerweise aus einem Kunststoffspritzgußteil besteht. Der Klips 16, der zwei im Abstand voneinander angeordnete und parallel zueinander verlaufende Federarme 18 mit außenseitigen Rastnocken 19 aufweist, sitzt schnäpperartig in dem Durchbruch 20 einer mit der Verstärkungseinlage 6 verbundenen Halteplatte 21, wie dies insbesondere durch Fig. 2 verdeutlicht ist.

Die obere Längskante 2 des Sonnenblendenkörpers 1 weist nahe vor der Stirnkante 5 eine Ausnehmung 22 auf, in die der Lagerzapfen 11 und die Schenkel 12 untergebracht sind. Dabei ist aus Fig. 1 ersichtlich, daß die Breite des Baukörpers 17 der Breite der Ausnehmung 22 entspricht, so daß sich ein sehr sauberer, ästhetisch ansprechender Abschluß ergibt. Die Breite des Baukörpers 17 entspricht, zumindest in etwa, seiner Höhe.

In den Fig. 3 und 4 ist ein weiteres Ausführungsbeispiel der Sonnenblende gezeigt, wobei die mit Fig. 1 und 2 übereinstimmenden Teile die gleichen Bezugszeichen tragen. Bei diesem Ausführungsbeispiel, bei dem in Fig. 3 nur die das Gegenlager tragende Sonnenblendenhälfte dargestellt ist, ist das Gegenlager im äußersten rechten Eckbereich der oberen Längskante 2 des Sonnenblendenkörpers 1 bzw. im oberen Eckbereich der Stirnkante 5 angeordnet, und zwar in einer im entsprechenden Eckbereich des Sonnenblendenkörpers 1 vorgesehenen Ausnehmung 22. Auch hier besteht das Gegenlager aus einem Gegenlagergehäuse (vergleiche Fig. 2) und einem Lagerzapfen 11, der entsprechend dem vorbeschriebenen Beispiel mit zwei Schenkeln 12, einer Sockelplatte 13 und einem Klips 16 einstückig ausgebildet ist. Der Klips 16 weist hier an seinem freien Endbereich einen ein Übergreifen der Verstärkungseinlage 6 ermöglichenden Schlitz 23 auf, der in eine hinterschnittene Aufnahmeöffnung 24 für die Verstärkungseinlage 6 mündet.

## Patentansprüche

1. Sonnenblende für Fahrzeuge mit einem als Polsterkörper ausgebildeten, in einer Hüllfolie eingebetteten und durch eine eingelagerte Verstärkungseinlage (6) ausgesteiften Sonnenblendenkörper (1), der an einem Endbereich eines seiner Längsränder (2) eine darin einendig eingelassene, anderendig von einem Schwenklager (9) aufgenommene Lagerachse (8) trägt und der am anderen Endbereich desselben Längsrandes (2), und zwar in einer Ausnehmung (22) desselben, einen lösbar in die Lageraufnahme eines Gegenlagers (10) einrastbaren, durch den Steg eines zwei Schenkel (12) einendig miteinander verbindenden Baukörpers (17) gebildeten Lagerzapfen (11) aufweist, dadurch gekennzeichnet, daß der Baukörper (17) auf einer Breitseite bzw. Hauptfläche des Sonnenblendenkörpers (1) aufliegend angeordnet und durch senkrecht zu dieser Fläche wirkende Befestigungsmittel am Sonnenblendenkörper (1) gehalten ist.

2. Sonnenblende nach Anspruch 1, dadurch gekennzeichnet, daß der Baukörper (17) in einer muldenförmigen Vertiefung (15) des Sonnenblendenkörpers (1) angeordnet ist.

3. Sonnenblende nach Anspruch 1 oder 2, dadurch gekennzeichnet, daß der Baukörper (17) durch mindestens ein einseitig die Hüllfolie und den Polsterkörper bis zur Verstärkungseinlage (6) durchdringendes Verankerungselement an der Verstärkungseinlage (6) befestigt ist.

4. Sonnenblende nach einem der Ansprüche 1 bis 3, dadurch gekennzeichnet, daß die dem Steg (11) abgewandten Schenkelenden des Baukörpers (17) durch eine Sockelplatte (13) miteinander verbunden sind.

5. Sonnenblende nach einem der Ansprüche 1 bis 4, dadurch gekennzeichnet, daß der Baukörper (17) als Kunststoffspritzgußteil ausgebildet ist.

6. Sonnenblende nach einem der Ansprüche 1 bis 5, dadurch gekennzeichnet, daß das Verankerungselement ein, vorzugsweise einstückig mit der Sockelplatte (13) des Baukörpers (17) ausgebildeter Klips (16) ist.

7. Sonnenblende nach Anspruch 6, dadurch gekennzeichnet, daß der Klips (16), dessen freier Endbereich mindestens zwei im Abstand voneinander angeordnete und parallel zueinander verlaufende Federarme (18) mit außenseitig angeformten Rastnocken (19) aufweist, schnäpperartig in dem Durchbruch (20) einer mit der Verstärkungseinlage (6) verbundenen Halteplatte (21) angeordnet ist.

8. Sonnenblende nach Anspruch 6, dadurch gekennzeichnet, daß der Klips (16) an seinem freien Endbereich einen ein übergreifen der Verstärkungseinlage (6) ermöglichenden Schlitz (23) aufweist, der in eine hinterschnittene Aufnahmeöffnung (24) für die Verstärkungseinlage (6) mündet.

9. Sonnenblende nach einem der Ansprüche 1 bis 8, dadurch gekennzeichnet, daß die Schenkel (12) des Baukörpers (17) zwecks Anordnung und Ausrichtung des Lagerzapfens (11) in der Mittelebene des Sonnenblendenkörpers (1) gekrümmt sind.

10. Sonnenblende nach einem der Ansprüche 1 bis 9, dadurch gekennzeichnet, daß der Lagerzapfen (11) in einer kurz vor dem entsprechenden Stirnende (5) des Sonnenblendenkörpers (1) befindlichen Ausnehmung (22) oder in einer unmittelbar an dem entsprechenden Ende befindlichen Ausnehmung (22) angeordnet ist.

## Claims

1. A sun visor for a vehicle, the visor comprising a padded sun visor body (1) encased in a foil jacket and stiffened by a reinforcing insert (6) embedded therein, in which one end portion of a support shaft (8) is inserted into one end portion of the visor body adjcent one of the latter's longitudinal edges (2) and the shaft's other end portion is mounted in a swivel bearing (9), in which the other end portion of the visor body adjacent the same longitudinal edge (2), namely a recess (22) formed therein, is provided with a journal pin (11) which is removably latchable on a supporting seat of a counter support (10), in which the journal pin is a cross-piece of a component (17) and connects two legs (12) thereof at one of their ends, characterized in that the component (17) is buttingly arranged on one of the visor body's broad, or main, faces and is retained on the visor body (1) by fastening means acting in a direction normal to this face.

2. A sun visor according to claim 1, characterized in that the component (17) is located in a trough-shaped cavity (15) of the visor body (1).

3. A sun visor according to claim 1 or claim 2, characterized in that the component (17) is fastened to the reinforcing insert (6) by at least one anchoring member which penetrates one side of the foil jacket and the padding up to the reinforcing insert. (6).

4. A sun visor according to any of the claims 1 to 3, characterized in that the ends of the component's (17) legs remote from the cross-piece (11) are connected to one another by a plinth (13).

5. A sun visor according to any of the claims 1 to 4, characterized in that the component (17) is an injection-moulded plastics product.

6. A sun visor according to any of the claims 1 to 5, characterized in that the anchoring member is a clip (16) which, preferably, is formed integrally with the plinth (13) of the component (17).

7. A sun visor according to claim 6, characterized in that the clip (16), the free end of which is provided with at least two spacedly arranged parallel spring arms (18) each having at its face remote from the other arm an integrally formed detent (19), is held in snap-in fashion in an opening (20) of a latch plate (21) joined to the reinforcing insert (6).

8. A sun visor according to claim 6, characterized in that the clip (16) is provided in its free end section with a notch (23) enabling the clip to overlap the reinforcing insert (6), and in that the notch opens into a back-tapered locating aperture (24) for the reinforcing insert (6).

9. A sun visor according to any of the claims 1 to 8, characterized in that the legs (12) of the component (17) are curved for the purpose of arranging the journal pin (11) in and to align it with the median plane of the visor body (1).

10. A sun visor according to any of the claims 1 to 9, characterized in that the journal pin (11) is arranged in the recess (22) which is located short of the appropriate lateral edge (5) of the visor body (1) or directly at the appropriate lateral edge.

**Revendications**

1. Pare-soleil pour véhicules automobiles comprenant un corps (1) constitué sous forme d'un élément rembourré, incorporé dans une feuille d'enveloppement et rendu rigide par une garniture de renforcement (6) incorporée, qui supporte dans une région d'extrémité de l'un de ses bords longitudinaux (2) un axe de support (8) introduit dans ce bord par une extrémité, et reçu à son autre côté par un palier de pivotement (9), et qui comprend dans l'autre région d'extrémité du même bord longitudinal (2) et dans un évidement (22) de celui-ci un tourillon d'appui (11) pouvant s'enclencher de façon amovible dans un logement de contre-palier (10), et formé par la partie de dos d'un corps de montage (17) reliant deux branches (12) l'une à l'autre à une extrémité, caractérisé en ce que le corps de montage (17) est disposé à plat sur un côté large ou sur une surface principale du corps (1) du pare-soleil et est maintenu sur le corps (1) du pare-soleil par moyens de fixation coopérant perpendiculairement avec cette surface.

2. Pare-soleil selon la revendication 1, caractérisé en ce que le corps de montage (17) est disposé dans un enfoncement en forme de cuvette (15) du corps (1) du pare-soleil.

3. Pare-soleil selon la revendication 1 ou 2, caractérisé en ce que le corps de montage (17) est fixé à la garniture de renforcement (6) par au moins un élément d'ancrage traversant par un côté la feuille d'enveloppement et l'élément rembourré jusqu'à la garniture de renforcement (6).

4. Pare-soleil selon l'une quelconque des revendications 1 à 3, caractérisé en ce que les extrémités des branches du corps de montage (17) qui sont à l'opposé de leur partie de dos (11) sont reliées l'une à l'autre par une plaque formant socle (13).

5. Pare-soleil selon l'une quelconque des revendications 1 à 4, caractérisé en ce que le corps de montage (17) est constitué sous forme d'un élément en matière plastique moulé par injection.

6. Pare-soleil selon l'une quelconque des revendications 1 à 5, caractérisé en ce que l'élément d'ancrage se présente sous forme d'un clips (16) réalisé de préférence d'un seul tenant avec la plaque formant socle (13) du corps de montage (17).

7. Pare-soleil selon la revendication 6, caractérisé en ce que le clips (16), dont la région d'extrémité libre comprend au moins deux bras élastiques (18) disposés à une certaine distance l'un de l'autre et parallèles l'un à l'autre et présentant des saillies d'enclenchement (19) formées sur leurs côtés externes, est fixé par enclenchement dans l'évidement (20) d'une plaque de retenue (21) reliée à la garniture de renforcement (6).

8. Pare-soleil selon la revendication 6, caractérisé en ce que le clips (16) comprend dans sa région d'extrémité libre une fente (23) permettant d'enserrer la garniture de renforcement (6) et qui se prolonge par une ouverture de réception à contre-dépouille (24) destinée à la garniture de renforcement (6).

9. Pare-soleil selon l'une quelconque des revendications 1 à 8, caractérisé en ce que les branches (12) du corps de montage (17) sont recourbées dans le plan central du corps (1) du pare-soleil en vue du montage et de l'alignement du tourillon d'appui (11).

10. Pare-soleil selon l'une quelconque des revendications 1 à 9, caractérisé en ce que le tourillon d'appui (11) est disposé dans un évidement (22) constitué juste avant l'extrémité frontale correspondante (5) du corps (1) du pare-soleil, ou dans un évidement (22) constitué directement dans l'extrémité correspondante.

Fig.1

Fig.3

Fig.2

Fig.4